# EUROPEAN PATENT APPLICATION

(11) **EP 1 804 505 A2**
(43) Date of publication of application: **04.07.2007**
(21) Application number: 06256171.7
(22) Date of filing: 01.12.2006
(51) Int. Cl.: H04N 5/917

(54) **Video integrated circuit and video processing apparatus thereof**

(30) Priority: 27.12.2005 CN 200520147037 U
(71) Applicant: Beacon Advanced Technology Co., Ltd., Taipei Hsien 234 (TW)
(72) Inventor: Tsui, Kai-Liang, Yung-Ho Taipei Hsien, 234 Taiwan, R.O.C. (TW)
(74) Representative: Hayden, Nicholas Mark

(57) **Abstract**

A video integrated circuit and a video processing apparatus thereof, connected to a memory and a video display apparatus, for processing and displaying a plurality of video signals are provided. The video integrated circuit and the video processing apparatus comprise a processor, a video capture unit, a motion picture experts group decoder, a memory control unit, and a video output unit. The video integrated circuit and the video processing apparatus generate a plurality of images corresponding to the plurality of video signals after processing. The video integrated circuit and the video processing apparatus displaying the plurality of images in one single chip decrease the cost and the size of products.

## Description

### BACKGROUND OF THE INVENTION

### Field of the Invention

The present invention relates to a video integrated circuit and a video processing apparatus thereof; more particularly, relates to a video integrated circuit and a video processing apparatus thereof for processing and for displaying a plurality of video signals.

### Descriptions of the Related Art

The technology is progressing nowadays, the technology of processing image develops rapidly, and a video display apparatus is a product closely related to people's daily life. However, a conventional video display apparatus merely displaying a single image will be unable to match the need of receiving more information in a short time. For this reason, a video display apparatus offers picture-in-picture (PIP) display or picture-on-picture (POP) display is thus invented.

A conventional video display apparatus for processing a plurality of images comprises a plurality of integrated circuits. For instance, when processing a plurality of inputting digital video signals and generating a corresponding image, many kinds of integrated circuits, such as a processor, a video output/input port unit, a motion picture experts group (MPEG) codec, an integrated drive electronics (IDE) controller, etc., are required for cooperative operation. Owing to the combination of the integrated circuits, the size of the product is large, the cost is too much, and the dimensions of the product cannot reach the product requirement of light-weight, thin, short, and small in the present day. Therefore, a video integrated circuit for processing a plurality of video signals with a single integrated circuit and a video processing apparatus thereof are urgently required.

### SUMMARY OF THE INVENTION

An object of this invention is to provide a video integrated circuit for connection to a memory and a video display apparatus. The video integrated circuit comprises a processor, a video capture unit, a motion picture experts group (MPEG) codec, a memory control unit, and a video output unit. The video capture unit receives a plurality of digital video signals in response to a first signal from the processor and generates a processing signal. The MPEG codec receives and compresses the processing signal in response to a second signal from the processor. The memory control unit stores the processing signal in the memory in response to a third signal from the processor. The video output unit captures the processing signal from the memory via the memory control unit in response to a fourth signal from the processor and outputs the processing signal to the video display apparatus. The aforementioned first, second, third, fourth signals being accorded to the video capture unit, the MPEG codec, the memory control unit, and the video output unit are not limited to be the same signal.

The video integrated circuit may be further connected to a display interface apparatus such as a video graphics array (VGA) display apparatus. More significantly, the video integrated circuit may further comprise a VGA encoder for encoding the processing signal from the video output unit and for outputting the encoded processing signal to the VGA display apparatus.

The video integrated circuit may be further connected to a hardware storage device. More significantly, the video integrated circuit may further comprise a storage device interface controller such as an integrated drive electronics (IDE) controller for storing the processing signal in the hardware storage device in response to a fifth signal from the processor.

The video integrated circuit may be further connected to a peripheral interface bus such as a peripheral controller interface (PCI) bus. More significantly, the video integrated circuit may further comprise a PCI unit for outputting the processing signal to the PCI bus in response to a sixth signal from the processor.

The video integrated circuit may be further connected to a serial bus port such as a universal serial bus (USB) port. More significantly, the video integrated circuit may further comprise a USB unit for outputting the processing signal to the USB port in response to a seventh signal from the processor.

The video integrated circuit may be further connected to an Ethernet physical layer. More significantly, the video integrated circuit may further comprise an Ethernet medium access control layer for outputting the processing signal to the Ethernet physical layer in response to an eighth signal from the processor.

Another object of this invention is to provide a video processing apparatus for connection to a memory and a video display apparatus. The video processing apparatus comprises a first video integrated circuit and a second integrated circuit. Each of the first video integrated circuit and the second integrated circuit comprises a processor, a video capture unit, a motion picture experts group (MPEG) codec, a memory control unit, a video output unit. The processor, the MPEG codec, and the memory control unit are the same as the aforementioned processor, MPEG codec, and memory control unit. The video capture unit comprises a first input node and a second input node. The video capture unit receives a plurality of digital video signals via the first input node in response to a first signal from the processor and generates a processing signal. The video output unit comprises a first output node and a second output node. The video output unit captures the processing signal from the memory via the memory control unit in response to a fourth signal from the processor and outputs the processing signal to the video display apparatus via the first output node. Wherein the second output node of the video output unit of the first integrated circuit is connected to the second input node of the video capture unit of the second integrated circuit, and the processing signal of the first video integrated circuit is transmitted to the second video integrated circuit. The signals being accorded to the aforementioned units are not limited to be the same signal as well.

The detailed technology and preferred embodiments implemented for the subject invention are described in the following paragraphs accompanying the appended drawings for people skilled in this field to well appreciate the features of the claimed invention.

### BRIEF DESCRIPTION OF THE DRAWINGS

**FIG. 1** shows a first embodiment of a video integrated circuit in accordance with the present invention;
**FIG. 2** shows a first embodiment of a video integrated circuit in accordance with the present invention; and
**FIG. 3** shows an embodiment of a video processing apparatus in accordance with the present invention.

### DESCRIPTION OF THE PREFERRED EMBODIMENT

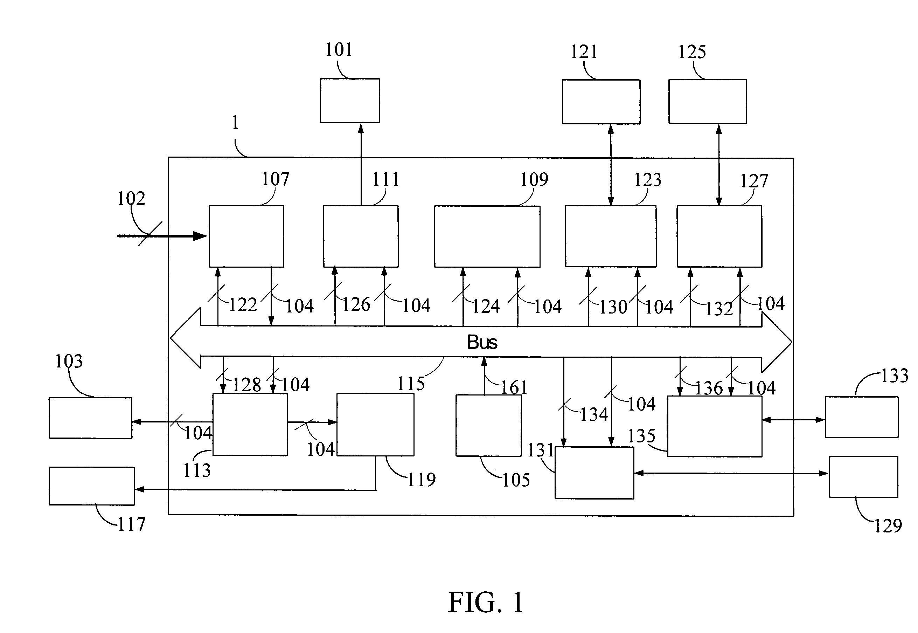

A first embodiment of the present invention is a video integrated circuit 1 for processing a plurality of digital video signals and for outputting the processed plurality of digital signals to a display, as shown in FIG. 1.

The video integrated circuit 1 is electrically connected to a memory 101 and a video display apparatus 103. The video integrated circuit 1 comprises a processor 105, a video capture unit 107, a motion picture experts group (MPEG) codec 109, a memory control unit 111, and a video output unit 113. The processor 105 outputs signals via a line 161 and a bus 115 to other units of the video integrated circuit 1. The video capture unit 107 receives a first signal 122 outputted from the processor 105 via the line 161 and the bus 115, receives a plurality of digital video signals 102 in response to the first signal 122, and generates a processing signal 104. The processing signal 104 is then transmitted to the bus 115. In this embodiment, the bus 115 is an advanced high performance bus (AHB), and the plurality of digital video signals 102 are four composite signals.

After receiving a second signal 124 outputted from the processor 105 via the line 161 and the bus 115, the MPEG codec 109 receives and compresses the processing signal 104 in response to the second signal 124, wherein the MPEG codec performs the compression in an MPEG-4 format. After receiving a third signal 126 outputted from the processor 105 via the line 161 and the bus 115, the memory control unit 111 stores the processing signal 104 in the memory 101 in response to the third signal 126. The processing signal 104 is stored in the memory 101 thereby, and the memory 101 is a synchronous dynamic random access memory (SDRAM). When the processing signal 104 is needed to be captured, the processor 105 transmits a fourth signal 128 via the line 161 and the bus 115 to the video output unit 113. The video output unit 113 requests the memory control unit 111 to capture the processing signal 104 from the memory 101, and outputs the processing signal 104 to the video display apparatus 103 directly or via a LCD controller (not shown) for displaying an image. The video output unit 103 may be a liquid crystal display (LCD) or a projector.

The video integrated circuit 1 further connected to a video graphics array (VGA) display apparatus 117. The video integrated circuit 1 further comprises a VGA encoder 119 for encoding the processing signal 104 from the video output unit 113 and for outputting the encoded processing signal to the VGA display apparatus 117. Therefore, the video integrated circuit 1 may generate a VGA signal directly to a display apparatus. In this embodiment, the VGA display apparatus 117 is a television.

The video integrated circuit 1 is further connected to a hardware storage device 121. The video integrated circuit 1 further comprises an integrated drive electronics (IDE) controller 123 for storing the processing signal 104 generated by the video capture unit 107 in the hardware storage device 121 after receiving a fifth signal 130 from the processor 105 via the line 161 and the bus 115. Since the hardware storage device 121 is able to store a great deal of data, the processing signal 104 would be preserved for a long time. The processing signal 140 is read from the hardware storage device 121 for displaying or for further processing when it is needed some day.

The video integrated circuit 1 is further connected to a peripheral controller interface (PCI) bus 125. The video integrated circuit 1 further comprises a PCI unit 127 for outputting the processing signal 104 generated by the video capture unit 107 to the PCI bus 125 in response to a sixth signal 132 after receiving the sixth signal 132 from the processor 105 via the line 161 and the bus 115. The PCI bus 125 is a standard interface for data transmission of a computer, and the processing signal 104 may be transmitted to be displayed on the computer or further processed via the PCI bus 125.

The video integrated circuit 1 is further connected to a universal serial bus (USB) port 129. The video integrated circuit 1 further comprises a USB unit 131 for outputting the processing signal 104 generated by the video capture unit 107 to the USB port 129 in response to a seventh signal 134 after receiving the seventh signal 134 from the processor 105 via the line 161 and the bus 115. The USB port 129 is also an interface connected to a host, and the processing signal 104 may be transmitted to be displayed on the computer or further processed via the USB port 129.

The video integrated circuit 1 is further connected to an Ethernet physical layer 133. The video integrated circuit 1 further comprises an Ethernet medium access control layer 135 for outputting the processing signal 104 generated by the video capture unit 107 to the Ethernet physical layer 133 in response to an eighth signal 136 after receiving the eighth signal 136 from the processor 105 via the line 161 and the bus 115. The processing signal 104 may be transmitted to Internet via the Ethernet physical layer 133.

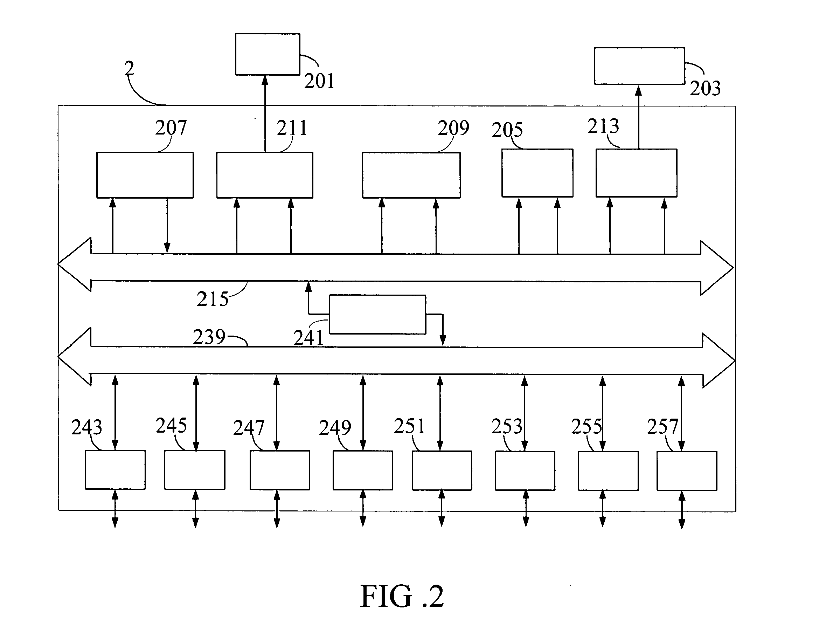

A second embodiment of the present invention is shown in FIG. 2. A video integrated circuit 2 is also electrically connected to a memory 201 and a video display apparatus 203. The video integrated circuit 2 also comprises a processor 205, a video capture unit 207, a MPEG codec 209, a memory control unit 211, a video output unit 213, and a first bus 215. The functions of the aforementioned units are the same as the functions of the corresponding units in the first embodiment, and are not depicts here.

The video integrated circuit 2 differs from the video integrated circuit 1 in further comprising a second bus 239 and a bus bridge 241, wherein the second bus 239 is an advanced peripheral bus (APB), and the bus bridge 241 is an AHB-APB bridge for connecting the first bus 215 and the second bus 239. The second bus 239 is further connected to an I²C bus 243, an IrDA interface 245, a storage card interface 247, a GPIO port 249, an audio interface 251, a keyboard/mouse interface 253, a UART interface 255, and an interrupt controller 257. The second bus 239 transmits signals to the first bus 215 via the bus bridge 241. Therefore, any signal generated by the processor 205, the video capture unit 207, the MPEG codec 209, the memory control unit 211, or the video output unit 213 may be transmitted via the aforementioned interfaces 243, 245, 247, 249, 251, 253, 255, and 257, and a user may inputs a control signal or a datum to the video integrated circuit 2 via the aforementioned interfaces 243, 245, 247, 249, 251, 253, 255, and 257.

Both the video integrated circuit 1 and the video integrated circuit 2 receives four video signals, at least four images would be processed and displayed simultaneously thereby. The prior art requires many apparatuses for processing a plurality of video signals, and brings about a high cost and a large space necessity. The video integrated circuit of the present invention integrates the functions of many conventional integrated circuit chips on a single integrated circuit chip. The integration of the present invention decreases the area for the layout, and further saves the cost and minimizes the dimensions of the product.

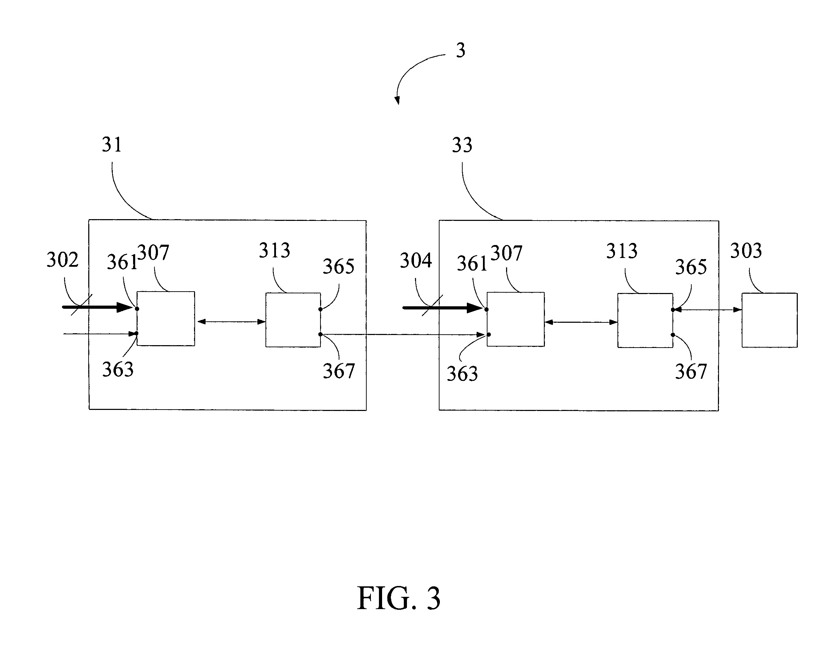

The present invention further provides a video processing apparatus, and the embodiment thereof is illustrated in FIG. 3. The video processing apparatus 3 processes and controls a plurality of digital video signals and then displays the processed and controlled plurality of digital video signals to displays, such as a LCD, a TV, a monitor, a projector, etc. The video processing apparatus 3 enables a signal display to display a plurality of images at the same time.

The video processing apparatus 3 comprises a first video integrated circuit 31 and a second video integrated circuit 33. The units in the first video integrated circuit 31 and the second video integrated circuit 33 are identical to the video integrated circuits of the first embodiment and the second embodiment. The video capture unit 307 of the first video integrated circuit 31 and the second video integrated circuit 33 further comprises a first input node 361 and a second input node 363. The first input node 361 is configured to receive a plurality of digital video signals 302 and to generate the aforementioned processing signal. The second input node 363 is connected to a video output unit 313 of a front end video integrated circuit. The video output unit 313 of the first video integrated circuit 31 and the second video integrated circuit 33 further comprises a first output node 365 and a second output node 367. The first output node 365 outputs the processing signal to a video display apparatus 303, and the second output node 367 is connected to the second input node 363 of the video capture unit 307 of a back end video integrated circuit. In this embodiment, the second output node 367 of the video output unit 313 of the first video integrated circuit 31 is connected to the second input node 363 of the video capture unit 307 of the second video integrated circuit 33, and the processing signal of the first video integrated circuit 31 would be inputted into the second video integrated circuit 33.

If both the video integrated circuit 1 and the video integrated circuit 2 can process four video signals, then the first output node 365 and the second output node 367 of the video output unit 313 of the second video integrated circuit 33 can output eight images respectively, wherein four images of the eight images are generated from the digital video signal 302 of the first input node 361 of the video capture unit 307 of the first video integrated circuit 33, and the other four images are generated from the digital video signal 304 of the first input node 361 of the video capture unit 307 of the first video integrated circuit 33. The second video integrated circuit 33 enables the eight images to be displayed simultaneously on the video display apparatus 303 via the first output node 365.

Though the embodiment is illustrated with the video processing apparatus comprising two video integrated circuits, people skilled in this field may proceed with a variety of modifications having the video processing apparatus with more than two video integrated circuits. The video processing apparatus comprising four video integrated circuits, for example, may display sixteen images at the same time.

The above disclosure is related to the detailed technical contents and inventive features of the subject invention. People skilled in this field may proceed with a variety of modifications and replacements based on the disclosures and suggestions of the invention as described without departing from the characteristics thereof. Nevertheless, although such modifications and replacements are not fully disclosed in the above descriptions, they have substantially been covered in the following claims as appended.

## Claims

1. A video integrated circuit for connection to a memory and a video display apparatus, comprising:
a processor;
a video capture unit for receiving a plurality of digital video signals in response to a first signal from the processor and for generating a processing signal;
An Audio/Video compression codec for receiving and compressing the processing signal in response to a second signal from the processor;
a memory control unit for storing the processing signal in the memory in response to a third signal from the processor; and
a video output unit for capturing the processing signal from the memory via the memory control unit in response to a fourth signal from the processor and for outputting the processing signal to the video display apparatus.

2. The video integrated circuit as claimed in claim 1, further connected to a display interface apparatus, wherein the video integrated circuit further comprises an encoder for encoding the processing signal from the video output unit and for outputting the encoded processing signal to the display apparatus.

3. The video integrated circuit as claimed in claim 2 wherein said display interface apparatus comprises a video graphics array (VGA) display apparatus and said encoder is a VGA encoder.

4. The video integrated circuit as claimed in claim 1 or 2, further connected to a hardware storage device, wherein the video integrated circuit further comprises an storage device interface controller for storing the processing signal in the hardware storage device in response to a fifth signal from the processor

5. The video integrated circuit as claimed in claim 4 wherein said storage device interface controller comprises an integrated drive electronics (IDE) controller.

6. The video integrated circuit as claimed in claim 1, 2 or 3, further connected to a peripheral interface bus, wherein the video integrated circuit further comprises a unit for outputting the processing signal to the peripheral interface bus in response to a sixth signal from the processor.

7. The video integrated circuit as claimed in claim 6 wherein said peripheral interface bus comprises a peripheral controller interface (PCI) bus and wherein said unit for outputting the processing signal to the peripheral interface bus comprises a PCI unit.

8. The video integrated circuit as claimed in any preceding claim, further connected to a serial bus port, wherein the video integrated circuit further comprises a serial bus unit for outputting the processing signal to the serial bus port in response to a seventh signal from the processor.

9. The video integrated circuit as claimed in claim 8 wherein said serial bus port comprises a universal serial bus (USB) port and said serial bus unit comprises a USB unit..

10. The video integrated circuit as claimed in any preceding claim, further connected to an Ethernet physical layer, wherein the video integrated circuit further comprises an Ethernet medium access control layer for outputting the processing signal to the Ethernet physical layer in response to an eighth signal from the processor.

11. The video integrated circuit as claimed in claim 1, wherein the memory is a synchronous dynamic random access memory (SDRAM).

12. The video integrated circuit as claimed in any preceding claim, wherein the plurality of digital video signals are four composite signals.

13. The video integrated circuit as claimed in any preceding claim, wherein the AudioNideo compression codec performs the compression in an MPEG format, such as MPEG-4.

14. The video integrated circuit as claimed in any preceding claim, further comprising an advanced high performance bus (AHB) for transmitting the signals from the processor and the processing signal.

15. A video processing apparatus for connection to a memory and a video display apparatus, the video processing apparatus comprising a first video integrated circuit and a second integrated circuit, each of the first video integrated circuit and the second integrated circuit comprising:
a processor;
a video capture unit, comprising a first input node and a second input node, for receiving a plurality of digital video signals via the first input node in response to a first signal from the processor and for generating a processing signal;
an Audio/Video compression codec for receiving and compressing the processing signal in response to a second signal from the processor;
a memory control unit for storing the processing signal in the memory in response to a third signal from the processor; and
a video output unit, comprising a first output node and a second output node, for capturing the processing signal from the memory via the memory control unit in response to a fourth signal from the processor and for outputting the processing signal to the video display apparatus via the first output node;
wherein the second output node of the video output unit of the first integrated circuit is connected to the second input node of the video capture unit of the second integrated circuit, and the processing signal of the first video integrated circuit is transmitted to the second video integrated circuit.

16. The video processing apparatus as claimed in claim 15, further connected to a display interface apparatus, wherein the second video integrated circuit further comprises an encoder for encoding the processing signal from the video output unit and for outputting the encoded processing signal to the display apparatus.

17. The video processing apparatus as claimed in claim 16 wherein said display interface apparatus comprises a video graphics array (VGA) display apparatus and said encoder is a VGA encoder.

18. The video processing apparatus as claimed in any of claims 15 to 17, further connected to a hardware storage device, wherein each of the first and the second video integrated circuits further comprises an storage device interface controller for storing the processing signal in the hardware storage device in response to a fifth signal from the processor.

19. The video processing apparatus as claimed in claim 18 wherein said storage device interface controller comprises an integrated drive electronics (IDE) controller.

20. The video processing apparatus as claimed in any of claims 11 to 19, further connected to a peripheral interface bus, wherein each of the first and the second video integrated circuits further comprises a PCI unit for outputting the processing signal to the peripheral interface bus in response to a sixth signal from the processor.

21. The video processing apparatus as claimed in claim 20 wherein said peripheral interface bus comprises a peripheral controller interface (PCI) bus and wherein said unit for outputting the processing signal to the peripheral interface bus comprises a PCI unit.

22. The video processing apparatus as claimed in any of claims 11 to 21, further connected to a serial bus port, wherein each of the first and the second video integrated circuits further comprises a serial bus unit for outputting the processing signal to the serial bus port in response to a seventh signal from the processor.

23. The video processing apparatus as claimed in claim 22 wherein wherein said serial bus port comprises a a universal serial bus (USB) port and said serial bus unit comprises a USB unit.

24. The video processing apparatus as claimed in any of claims 11 to 23, further connected to an Ethernet physical layer, wherein each of the first and the second video integrated circuits further comprises an Ethernet medium access control layer for outputting the processing signal to the Ethernet physical layer in response to an eighth signal from the processor.

25. The video processing apparatus as claimed in any of claims 11 to 24, wherein the memory is a synchronous dynamic random access memory (SDRAM).

26. The video processing apparatus as claimed in any of claims 11 to 25, wherein the plurality of digital video signals are four composite signals.

27. The video processing apparatus as claimed in any of claims 11 to 26, wherein the MPEG codec performs the compression in an MPEG format, such as MPEG-4.

28. The video processing apparatus as claimed in any of claims 11 to 27, wherein each of the first and the second video integrated circuits further comprises an advanced high performance bus (AHB) for transmitting the signals from the processor and the processing signal.
